# EUROPEAN PATENT APPLICATION

(11) **EP 3 273 682 A1**
(43) Date of publication of application: **24.01.2018**
(21) Application number: 16764656.1
(22) Date of filing: 25.02.2016
(51) Int. Cl.: H04N 7/15

(54) **COMMUNICATION CONTROL DEVICE, COMMUNICATION SYSTEM, COMMUNICATION CONTROL PROGRAM, AND COMMUNICATION CONTROL METHOD**

(30) Priority: 16.03.2015 JP 2015051676
(71) Applicant: Ricoh Company, Ltd., Tokyo 143-8555 (JP)
(72) Inventor: HINOHARA, Hiroshi, Tokyo 143-8555 (JP); KANDA, Hiroyuki, Tokyo 143-8555 (JP); ASAI, Takahiro, Tokyo 143-8555 (JP); INOUE, Koichi, Tokyo 143-8555 (JP)
(74) Representative: Schwabe - Sandmair - Marx
(86) International application number: PCT/JP2016/055547
(87) International publication number: WO 2016/147826

(57) **Abstract**

A communication control apparatus control establishment of sessions for transmitting content data between communication terminals in a communication system having relay management apparatuses for relaying the content data transmitted from the communication terminals, includes a route setter configured to select one or more relay management apparatuses to set a route for transmitting the content data, based on delay information for each of the sessions, a selector to select, from the selected relay management apparatuses, a relay management apparatus to synthesize the content data to transmit the synthesized content data to the communication terminals that join the session, and a transmitter to transmit selection information indicating the selected relay management apparatus to, among the communication terminals that join the established session, at least one communication terminal coupled to a relay management apparatus differing from the selected relay management apparatus.

## Description

### [Technical Field]

An aspect of the following disclosure relates to a communication system that controls establishment of a session for transmitting content data between communication terminals in the communication system having multiple relay management apparatuses that manage relaying of content data transmitted from communication terminals.

### [Background Art]

Communication systems for making phone calls, conducting conferences and the like via a communication network such as the Internet and dedicated lines have become widespread along with demands for reduction in travel expenses and time of parties. In such a communication system, when communication is started between communication terminals, content data such as image data and sound data are transmitted and received, thereby enabling communication between the parties.

In a telecommunication system for teleconference, a multipoint control unit (MCU), a management apparatus for managing each MCU, and the like are provided in addition to the communication terminals. The MCU transmits content data such as image data and sound data received from a certain communication terminal to one or more other communication terminals according to management by the management apparatus. This enables the content data to be relayed between the communication terminals of the multiple sites. The use of multiple MCUs enables establishment of a session for transmitting content data between multiple communication terminals exceeding the number of communication terminals connectable to one MCU.

A technology of selecting an optimum relay apparatus is known in the art. For example, such a technology includes calculating the sum of distances between each of two transmission terminals that join a conference and each relay apparatus, and selecting a relay apparatus that obtains the smallest distance as the optimum relay apparatus (Patent Document 1).

### [Related-Art Documents]

### [Patent Documents]

[Patent Document 1] Japanese Unexamined Patent Application Publication No. 2014-072703

### [Summary of the Invention]

### [Problem to be Solved by Invention]

However, the transmission route selected as an optimal one by the method such as that described above, where the communication terminals at multiple sites each select the nearest relay apparatus to transfer data between the relay apparatuses or each select a relay apparatus that obtains the smallest sum of distances from the multi-site communication terminals, will not in actuality be the optimal transmission route.

### [Means to Solve the Problem]

It is an object of the present invention to select an optimum transmission route in a communication system having a relay apparatus that relays information between communication terminals.

According to an aspect of the disclosure, a communication control apparatus configured to control establishment of sessions for transmitting content data between communication terminals in a communication system having a plurality of relay management apparatuses for relaying the content data transmitted from the communication terminals is provided. The communication control apparatus includes a route setter configured to select one or more relay management apparatuses for relaying the content data from among the plurality of relay management apparatuses to set a route for transmitting the content data, based on delay information for each of the sessions; a selector configured to select, from among the relay management apparatuses selected by the route setter, a relay management apparatus to synthesize the content data transmitted from the communication terminals to transmit the synthesized content data to the communication terminals that join the session; and a transmitter configured to transmit selection information indicating the selected relay management apparatus to, among the communication terminals that join the established session, at least one communication terminal coupled to a relay management apparatus differing from the selected relay management apparatus.

### [Advantageous Effect of the Invention]

According to at least one embodiment, an optimum transmission route may be selected in a communication system having a relay apparatus that relays information between communication terminals.

### [Brief Description of Drawings]

FIG. 1 is a schematic diagram of a communication system according to an embodiment of the present invention;
FIG. 2 is a hardware configuration diagram of a terminal;
FIG. 3 is a hardware configuration diagram of a terminal;
FIG. 4 is a functional block diagram each illustrating a terminal, a relay management apparatus, a call control apparatus, and a session management apparatus;
FIG. 5 is a conceptual diagram illustrating a state of transmission and reception of content data and various management information in a communication system;
FIG. 6 is a sequence diagram illustrating a process in which a terminal logs in to a call control apparatus;
FIG. 7 is a sequence diagram illustrating a process of establishing a content data session;
FIG. 8 is a sequence diagram illustrating a process of establishing a content data session;
FIG. 9 is a sequence diagram illustrating a process of joining a content data session sed; and
FIG. 10 is a sequence diagram illustrating another example process of establishing a content data session.

### [Mode for Carrying Out the Invention]

The following describes embodiments with reference to accompanying drawings. The embodiments described below are merely examples, and the embodiments to which the present invention is applied are not limited to the following embodiments. In all the drawings for illustrating the embodiments, the same reference numerals are assigned to the parts having the same function, and repeated explanation is omitted.

### EMBODIMENTS

### OVERALL CONFIGURATION OF EMBODIMENT

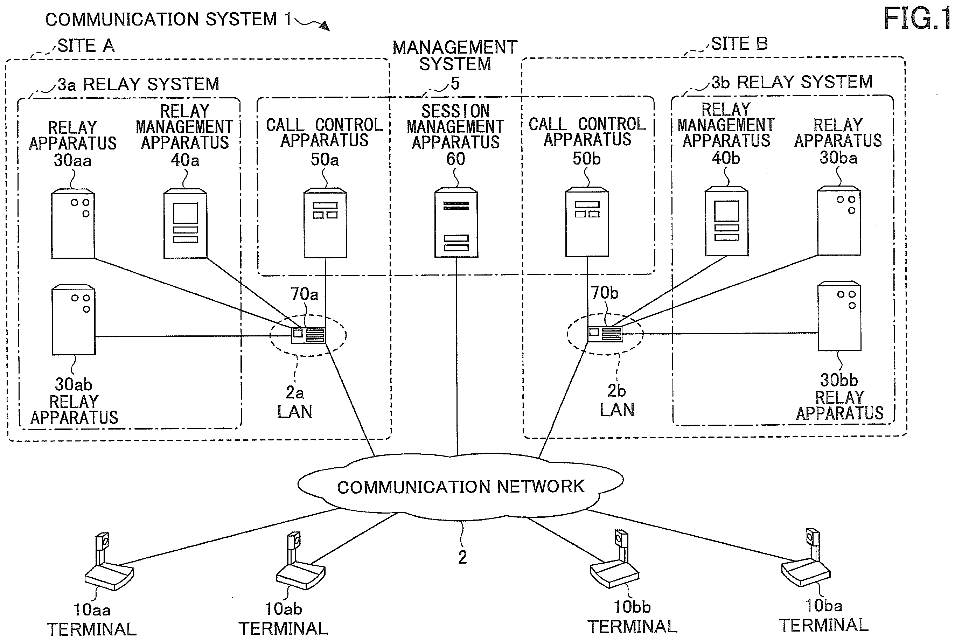

FIG. 1 is a schematic diagram of a communication system according to an embodiment of the present invention. As illustrated in FIG. 1, a communication system 1 includes communication terminals (10aa, 10ab, 10ba, 10bb) that are examples of video conference terminals, relay systems (3a, 3b), and a management system 5. In the following, a call terminal is simply described as a terminal and any one of the terminals (10aa, 10ab, 10ba, 10bb) is referred to as terminal 10.

The relay system 3a includes relay apparatuses (30aa, 30ab) and a relay management apparatus 40a. The relay system 3b includes relay apparatuses (30ba, 30bb) and a relay management apparatus 40b. In the following, any one of the relay apparatuses (30aa, 30ab, 30ba, 30bb) is referred to as a relay apparatus 30. Likewise, any one of the relay management apparatuses (40a, 40b) is referred to as a relay management apparatus 40.

The relay apparatus 30 relays content data such as image data and sound data between multiple terminals 10. Note that the image of the image data may be a moving image or a still image, and may be a combination of a moving image and a still image.

The relay management apparatus 40 is a computer having a server function. The relay management apparatus 40 manages relay apparatuses 30 at the site to which the relay management apparatus 40 belongs.

The management system 5 includes call control apparatuses (50a, 50b) and a session management apparatus 60. In the following, any one of the call control apparatuses (50a, 50b) is referred to as a call control apparatus 50.

The call control apparatus 50 is a computer having a server function. In the communication system 1, the call control apparatus 50 controls establishment of a session (content data session sed) for transmitting content data between the terminals 10.

The session management apparatus 60 manages the above-described various information relating to the content data session sed.

The relay apparatuses (30aa, 30ab), the relay management apparatus 40a, and the call control apparatus 50a are coupled at site A so as to be mutually communicable via a local area network (LAN)2a. For example, the site A may be a data center in Tokyo.

The relay apparatuses (30ba, 30bb), the relay management apparatus 40b, and the call control apparatus 50b are communicably mutually coupled at site B via a LAN 2b. For example, the site B may be a data center in the UK.

The apparatuses at site A and at site B each are coupled to apparatuses at other sites, the session management apparatus 60, or the terminal 10 from routers (70a, 70b) via a communication network 2 so as to mutually communicate with one another. The communication network 2 may be the Internet, a mobile phone network, or a dedicated line. For example, communication between the relay apparatuses 30 or between the call control apparatuses 50 may be stabilized by coupling the apparatuses of the site A and the apparatuses of the site B via the communication network 2 using a dedicated line.

The session management apparatus 60 may be located at site A or at site B, and may be coupled to any of the LAN 2a or the LAN 2b.

This communication system 1 allows users of the terminals 10 to communicate with one another. This communication may be achieved by sound, video (image), or a combination of sound and video (image).

In FIG. 1, the two sites (A, B) and the four terminals (10aa, 10ab, 10ba, 10bb) are depicted for simplifying explanation, however, the communication system 1 may have three or more sites and may include five or more terminals 10.

Further, the site A and the site B are coupled via a backbone network in addition to the communication network 2 such as the Internet, and communication between relay apparatuses and between call control apparatuses may be performed via the backbone network. The backbone network may be a dedicated line or an exclusive route virtually created over the Internet such as a virtual private network (VPN). Bandwidth control may be performed by constructing the backbone network with a dedicated line, which may provide advantageous effects such as lower delay, higher reliability, higher confidentiality, and the like than by constructing the backbone network over the Internet.

The respective terminals 10 are coupled to the nearest call control apparatuses 50. Note that the nearest call control apparatus 50 may be determined in advance for each terminal 10, or may be determined at the time of connection by global server load balancing (GSLB) or the like. For example, the terminals 10aa and 10ab are coupled to the site A, and the terminals 10bb and 10ba are coupled to the site B. The relay management apparatus 40 to which the terminal 10 is coupled is determined, for example, according to a communication partner of the terminal 10.

### HARDWARE CONFIGURATION OF EMBODIMENT

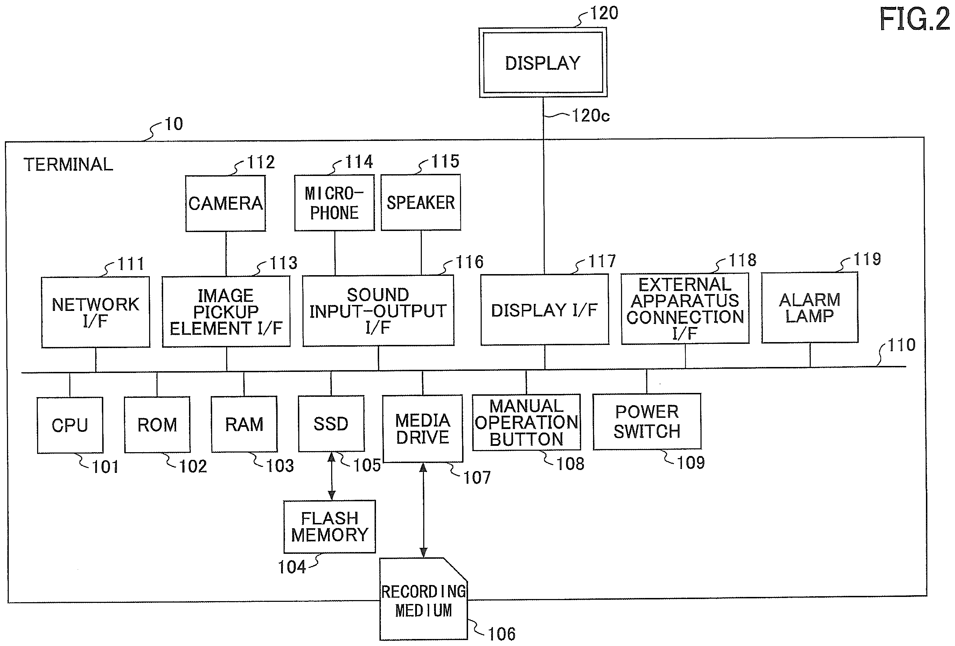

FIG. 2 is a hardware configuration diagram of the terminal 10 according to the embodiment. As illustrated in FIG. 2, the terminal 10 of the embodiment includes a central processing unit (CPU) 101 configured to control overall operations of the terminal 10, a read only memory (ROM) 102 configured to store a program used for driving the CPU 101 such as an initial program loader (IPL), a random access memory (RAM) 103 used as a work area of the CPU 101,a flash memory 104 configured to store programs for various terminals of the terminal 10, and various data such as image data and audio data, a solid-state drive (SSD) 105 configured to control reading or writing of various data with respect to the flash memory 104 under the control of the CPU 101, a media drive 107 configured to control reading or writing (storing) of data with respect to a recording medium 106 such as a flash memory or an IC card (integrated circuit card), an operation button 108 operated by a user when the user selects a destination, a power switch 109 for switching on/off the power supply of the terminal 10, and a network interface (I/F) 111 for data transmission using the communication network 2.

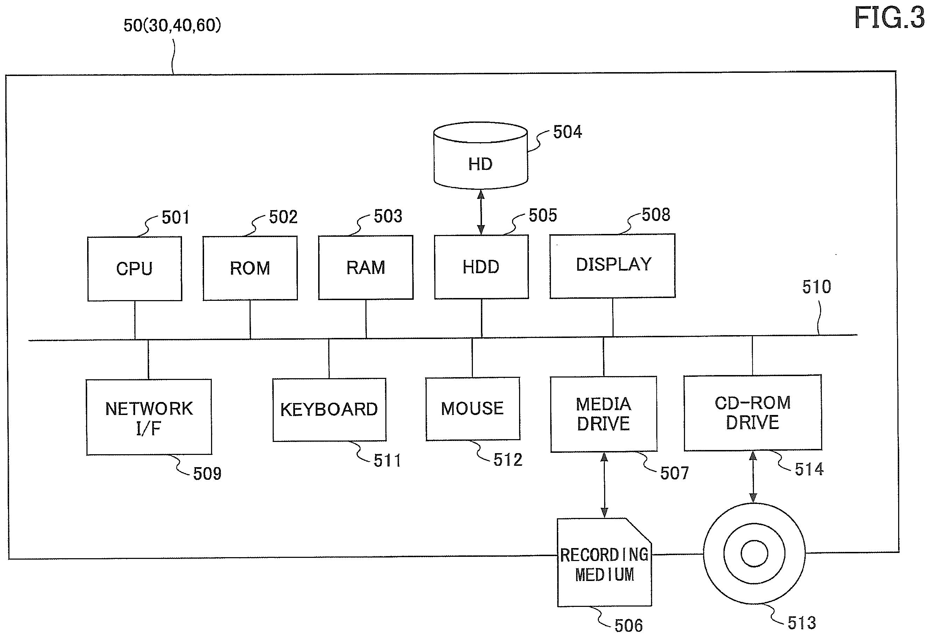

The terminal 10 further includes a built-in camera 112 configured to capture an image of a subject to acquire image data under the control of the CPU 101, an image pickup element I/F 113 configured to control the driving of the camera 112, a built-in microphone 114 configured to collect sound, a built-in speaker 115 configured to output sound, a sound input/output I/F 116 configured to process input and output of sound signals between the microphone 114 and the speaker 115 under the control of the CPU 101, a display I/F 117 configured to transmit image data to an external display 120 under the control of the CPU 101, an external apparatus connection I/F 118 configured to couple various external apparatuses, an alarm lamp 119 configured to indicate abnormality of various functions of the terminal 10, and a bus line 110 such as an address bus and a data bus for electrically coupling the above-described components as illustrated in FIG. 3.

The display 120 is a display unit including a liquid crystal or an organic electroluminescence (organic EL) configured to display an image of a subject, an operation, and the like. Further, the display 120 is coupled to the display I/F 117 via a cable 120c. The cable 120c may be an analog RGB (VGA) signal cable, a component video cable, a high-definition multimedia interface (HDMI) (registered trademark) cable, or a digital video interactive signal (DVI) cable.

The camera 112 includes a lens and a solid-state image pickup element configured to convert light into an electric charge to digitize an image (image) of a subject, and a complementary metal oxide semiconductor (CMOS), a charge coupled apparatus (CCD) and the like may be used as the solid-state image pickup element.

External apparatuses such as an external camera, an external microphone, and an external speaker may be electrically coupled to the external apparatus connection I/F 118 via a universal serial bus (USB) cable or the like. When an external camera is coupled to the external apparatus connection I/F 118, the external camera is driven in preference to the built-in camera 112 under the control of the CPU 101. Likewise, when an external microphone or an external speaker is coupled to the external apparatus connection I/F 118, the external microphone or the external speaker is driven in preference to a corresponding one of the built-in microphone 114 and built-in speaker 115, under the control of the CPU 101.

The recording medium 106 is detachably attached to the terminal 10. In addition, the recording medium 106a is not limited to the flash memory 104, and any nonvolatile memory such as an electrically erasable and programmable ROM (EEPROM) may be used insofar as the nonvolatile memory reads or writes data under the control of the CPU 101.

FIG. 3 is a hardware configuration diagram of the call control apparatus 50. The call control apparatus 50 includes a CPU 501 configured to control overall operations of the entire call control apparatus 50, a ROM 502 configured to store a program used for driving the CPU 501 such as IPL, a RAM 503 used as a work area of the CPU 501, an HD 504 configured to store various data such as a program for the call control apparatus 50, a hard disk drive (HDD) 505 configured to control reading or writing of various data with respect to the HD 504 under the control of the CPU 501, a media drive 507 configured to control reading or writing (storing) of data with respect to the recording medium 506 such as a flash memory, a display 508 configured to display various information such as a cursor, a menu, a window, a character, or an image, a network I/F 509 configured to perform data communication using the communication network 2, a keyboard 511 provided with multiple keys for a user to input characters, numerical values, various instructions, a mouse 512 for a user to select and execute various instructions, to select an object to be processed, and to move a cursor, a CD-ROM drive 514 configured to control reading or writing of various data with respect to a compact disc read only memory (CD-ROM) 513 as an example of a removable recording medium, a bus line 510 such as an address bus or a data bus for electrically coupling the above-mentioned components as illustrated in FIG. 3.

Since the relay apparatus 30, the relay management apparatus 40, and the session management apparatus 60 have the same hardware configuration as that of the call control apparatus 50, a description of these components will be omitted from the specification.

### FUNCTIONAL CONFIGURATION OF THE EMBODIMENT

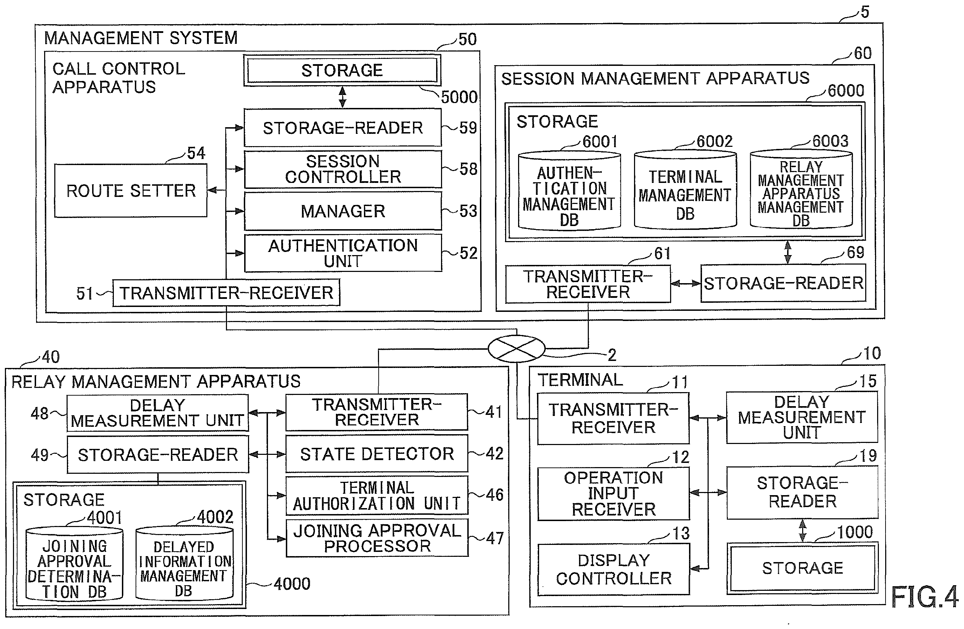

Next, a functional configuration of the embodiment will be described. FIG. 4 is a functional block diagram of the terminal 10, the relay management apparatus 40, the call control apparatus 50, and the session management apparatus 60 constituting a part of the communication system 1 according to the embodiment. In FIG. 4, the terminal 10, the relay management apparatus 40, and the call control apparatus 50 are coupled so as to enable data communication via the communication network 2.

### FUNCTIONAL CONFIGURATION OF TERMINAL

The terminal 10 includes a transmitter-receiver 11, an operation input receiver 12, a display controller 13, a delay measurement unit 15, and a storage-reader unit 19. These components are functions that may be achieved by any of the above components illustrated in FIG. 2 to operate instructions from the CPU 101 in accordance with a program loaded from the flash memory 104 in the RAM 103. The terminal 10 also includes a storage 1000 implemented by the ROM 102, the RAM 103, and the flash memory 104 illustrated in FIG. 2.

Next, a functional configuration of the terminal 10 will be described in detail with reference to FIGS. 2 and 4. In describing the functional configuration of the terminal 10, a relationship between each component illustrated in FIG. 2 and main components for implementing each component of the terminal 10 will also be described.

The transmitter-receiver 11 of the terminal 10 depicted in FIG. 4 is implemented by instructions from the CPU 101 and the network I/F 111, and is configured to transmit and receive various data (or information) with respect to a counterpart terminal, each apparatus or system, and the like via the communication network 2.

The operation input receiver 12 is implemented by instructions from the CPU 101, the operation button 108 and the power switch 109, and is configured to receive various inputs by a user and various types of selection made by the user.

The display controller 13 is implemented by instructions from the CPU 101 and the display I/F 117, and is configured to perform control for sending instructions from the CPU 101 and image data received from the other party during a call.

The delay measurement unit 15 is implemented by instructions from the CPU 101. The delay measurement unit 15 is configured to measure a time period from transmitting a packet to one or more active relay management apparatuses 40 included in a relay apparatus list, which is reported by the call control apparatus 50 at the time of starting the call, to receiving a response packet transmitted by the relay management apparatuses 40, thereby obtaining a delay time between the terminal 10 and each of the active relay management apparatuses 40. The delay measurement unit 15 sends information indicating the delay times between the terminal 10 and the active relay management apparatuses 40 to the call control apparatus 50.

The storage-reader 19 is implemented by instructions from the CPU 101 and by the SSD 105, or by instructions from the CPU 101 alone, and is configured to store various data in the storage 1000 and extract various data stored in the storage 1000.

### FUNCTIONAL CONFIGURATION OF RELAY MANAGEMENT APPARATUS

The relay management apparatus 40 includes a transmitter-receiver 41, a status detector 42, a terminal authorization unit 46, a joining approval processor 47, a delay measurement unit 48, and a storage-reader 49. These elements are functions that may be achieved by any of the above elements illustrated in FIG. 3 to operate instructions from the CPU 501 in accordance with a relay management apparatus program loaded from the HD 504 in the RAM 503. Further, the relay management apparatus 40 includes a storage 4000 formed of one of or both of the RAM 503 illustrated in FIG. 3 and the HD 504 illustrated in FIG. 3.

### JOINING APPROVAL DETERMINATION TABLE

The storage 4000 stores a joining approval determination DB 4001 including a joining approval determination table as illustrated in Table 1.

**Table 1**

| CONFERENCE ID | PASSWORD |
|---|---|
| C0001 | 01aaaa |
| C0002 | 02abab |
| ··· | ··· |

In this joining approval determination table, passwords such as personal identification number (PIN) are associated and managed with respect to a conference ID that indicates identification information for identifying a corresponding one of the conferences. For example, in the joining approval determination table illustrated in Table 1, a password for a conference having a conference ID "C0001" is "01aaaa".

### DELAY INFORMATION MANAGEMENT TABLE

The storage 4000 stores a delay information management DB 4002 including a delay information management table as illustrated in Table 2.

**Table 2**

| RELAY MANAGEMENT APPARATUS ID | DELAY INFORMATION | PRIORITY FACTOR |
|---|---|---|
| gb01 | 200ms | 0.5 |
| us01 | 150ms | 0.7 |
| ··· | ··· | ··· |

In this delay information management table, each relay management apparatus ID indicating identification information that identifies another relay management apparatus (e.g., a relay management apparatus 40b) is associated with delay information such as a delay time between the relay management apparatus 40a and another relay management apparatus 40b (in this example). Further, a priority factor, which indicates a level of prioritizing a route between the relay management apparatus 40 and each of the other relay management apparatuses 40, is associated for each of the relay management apparatuses 40. This priority factor is set on the basis of assumption that a backbone network has better quality than the Internet. The smaller the value of the priority factor, the higher the level of priority. This priority factor may be set in advance or may be dynamically updated based on a response result of a transmitted packet. For example, in the delay information management table illustrated in Table 2, the delay time between the relay management apparatus and another relay management apparatus having the relay management apparatus ID "gb01" is "200 ms" and the priority factor is "0.5".

Next, a detailed description is given of respective functional components of the relay management apparatus 40. In describing the functional configuration of the relay management apparatus 40, a relationship between each component illustrated in FIG. 3 and main components for implementing each component of the relay management apparatus 40 will also be described.

The transmitter-receiver 41 of the relay management apparatus 40 illustrated in FIG. 4 is implemented by instructions from the CPU 501 illustrated in FIG. 3 and a network I/F 509 illustrated in FIG. 3. The transmitter-receiver 41 is configured to transmit and receive various data (or information) with respect to another terminal, apparatus, or system via the communication network 2.

The status detector 42 is implemented by instructions from the CPU 501 illustrated in FIG. 3, and the status detector 42 is configured to detect an operating status of the relay management apparatus 40. The operating statuses include "online", "offline", "busy" and "temporarily suspended".

The terminal authorization unit 46 is implemented by instructions from the CPU 501 illustrated in FIG. 3, and the terminal authorization unit 46 is configured to perform an authorization process according to login request information transmitted by the request source terminal. When performing a login process, the terminal authorization unit 46 refers to the terminal authentication management table stored in the authentication management DB 6001 of the management system 5 to perform the authorization process according to whether there is a combination of communication ID and password that matches the combination of communication ID and password included in the authorization request. The terminal authorization unit 46 may transfer the authorization request transmitted by the request source terminal to the management system 5 to request an authorization process. Further, the request source terminal may acquire an access token issued by the management system 5 to transmit an authorization request including the access token. In this case, the terminal authorization unit 46 performs an authorization process according to whether the access token is included in the authorization request.

The joining approval processor 47 is implemented by instructions from the CPU 501 illustrated in FIG. 3. The joining approval processor 47 is configured to create a virtual conference room in response to a conference room creation request received via the transmitter-receiver 41, and associate a conference ID, which is identification information for identifying a conference to be held, with a password such as PIN to store the conference ID associated with the password in the joining approval determination DB 4001. Thereafter, the joining approval processor 47 searches the joining approval determination DB 4001 of the storage 4000 by the conference ID and password included in the login request as a search key, and determines whether the same conference ID and password combination is included in the joining approval determination DB 4001 so as to determine whether to authorize the terminal 10 to join the conference.

The delay measurement unit 48 is implemented by instructions from the CPU 501 illustrated in FIG. 3. The delay measurement unit 48 is configured to measure a time period from sending a packet from the relay management apparatus 40 to another relay management apparatus 40 to receive a response at a predetermined cycle such as once a day, once an hour, or the like so as to measure delay time between the original relay management apparatus 40 and another relay management apparatus 40. The delay measurement unit 48 updates the delay information management DB 4002 stored in the storage 4000 with the delay time measured by the storage-reader 49.

The storage-reader 49 is implemented by instructions from the CPU 501 illustrated in FIG. 3 and the HDD 205 illustrated in FIG. 3. The storage-reader 49 is configured to store various data in the storage 4000 and read various data stored in the storage 4000.

### FUNCTIONAL CONFIGURATION OF CALL CONTROL APPARATUS

The call control apparatus 50 includes a transmitter-receiver 51, an authentication unit 52, a manager 53, a route setter 54, a session controller 58, and a storage-reader 59. These elements are functions that may be achieved by any of the above elements illustrated in FIG. 3 to operate instructions from the CPU 501 in accordance with a call control apparatus program loaded from the HD 504 in the RAM 503. Further, the call control apparatus 50 has a storage 5000 configured by the HD 504.

Next, a detailed description is given of respective functional components of the call control apparatus 50. In describing the functional configuration of the call control apparatus 50, a relationship between each component illustrated in FIG. 3 and main components for implementing each component of the call control apparatus 50 will also be described.

The transmitter-receiver 51 is implemented by instructions from the CPU 501 and by the network I/F 509. The transmitter-receiver 51 is configured to transmit and receive various data (or information) with respect to each terminal, apparatus, or system via the communication network 2.

The authentication unit 52 is implemented by instructions from the CPU 501. The authentication unit 52 is configured to search the authentication management table (see Table 3) by the communication ID and password received by the transmitter-receiver 51 as a search key to determine whether the same communication ID and password combination is included in the authentication management table, thereby authenticating the terminal 10.

The manager 53 is implemented by instructions from the CPU 501, and is configured to store and manage an operating status and the like of the terminal 10 in association with each communication ID of the terminal 10 in the terminal management table (see Table 4).

The session controller 58 is implemented by instructions from the CPU 501, and is configured to control a communication session sed for transmitting content data between the terminals 10. The above control includes control for establishing a communication session, control for allowing the terminal 10 to join the established communication session, control for disconnecting the communication session, and the like.

The route setter 54 is implemented by instructions from the CPU 501. The route setter 54 is configured to set a route (communication route) by which the shortest delay time is obtained between the request source terminal and the destination terminal, based on the delay information between the terminal 10 and the relay management apparatus 40 transmitted by the terminal 10, the delay information between the relay management apparatuses transmitted by the relay management apparatus 40 and the priority factor. The route setter 54 reports the relay apparatus ID of the relay apparatus included in the route set in the session controller 58.

Further, the route setter 54 may set a route by which the shortest delay time is obtained between the request source terminal and the destination terminal based on the delay information such as the delay time between the terminal 10 and the relay apparatus 30, the delay information such as the delay time between the relay apparatuses, and the priority factor. The following illustrates a case where the route setter 54 sets a route (communication route) by which the shortest delay time is obtained between the request source terminal and the destination terminal, based on the delay information between the terminal 10 and the relay management apparatus 40 transmitted by the terminal 10, the delay information between the relay management apparatuses transmitted by the relay management apparatus 40, and the priority factor.

The storage-reader 59 is implemented by instructions from the CPU 501 and by the HDD 505, or by instructions from the CPU 501 alone, and is configured to store various data in the storage 5000 and extract various data stored in the storage 5000.

### FUNCTIONAL CONFIGURATION OF THE SESSION MANAGEMENT

### APPARATUS

The session management apparatus 60 has a transmitter-receiver 61 and a storage-reader 69. These elements are functions that may be achieved by any of the above elements illustrated in FIG. 3 to operate instructions from the CPU 501 in accordance with a session management apparatus program loaded from the HD 504 in the RAM 503. Further, the session management apparatus 60 has a storage 6000 configured by the HD 504. The storage 6000 stores an authentication management DB 6001 including an authentication management table to be described later, a terminal management DB 6002 including a terminal management table, and a relay management apparatus management DB 6003 including a relay management apparatus management table.

### AUTHENTICATION MANAGEMENT TABLE

The storage 6000 stores an authentication management DB 6001 including an authentication management table as illustrated in Table 3.

**Table 3**

| COMMUNICATION ID | PASSWORD |
|---|---|
| 01aa | aaaa |
| 01ab | abab |
| 01ba | baba |
| ··· | ··· |

In the authentication management table, a communication ID and a password are managed in association with each other for identifying a terminal 10 as a communication destination. Note that the communication ID may be an ID stored in advance in the terminal 10 or an ID input by the user to the terminal 10. Further, the communication ID may be an ID read from a recording medium such as an IC card coupled to the terminal 10. When the communication ID is input to the terminal 10, the management system 5 manages the communication ID transmitted from the login requesting terminal 10 in association with the login request source terminal 10, thereby identifying the terminal 10 based on the communication ID. Note that it is assumed that the communication IDs of the terminals (10aa, 10ab, 10ba, and 10bb) are "01aa, 01ab, 01ba, and 01bb", respectively.

### TERMINAL MANAGEMENT TABLE

The storage 6000 stores a terminal management DB 6002 including a terminal management table as illustrated in Table 4.

**Table 4**

| COMMUNI -CATION ID | DESTINATION NAME | OPERATING STATUS | COMMUNICATION STATUS | JOINING CONFERENCE ROOM | ACCESS POINT |
|---|---|---|---|---|---|
| 01aa | TOKYO | ONLINE | chat | C0001@tokyo.conf.example.com | TOKYO |
| 01ab | BELGIUM | ONLINE | chat | C0001@tokyo.conf.example.com | UK |
| 01ba | UK | ONLINE | None | None | UK |
| 01bb | US | ONLINE | None | None | US |
| ··· | ··· | ··· | ··· | ··· | ··· |

In this terminal management table, a destination name, an operating status of the terminal 10, a communication status of the terminal 10, and a session ID of the content data session joined by the terminal 10 are associated with the communication ID of each of the terminals 10. Furthermore, in this session, a joining conference room represented by domain information of the relay management apparatus 40 that manages overall relay of the content data, and information indicating a site to which the call control apparatus 50 or the relay management apparatus 40 acting as connection destinations of the terminal 10 belong is managed in association with the communication ID of each of the terminals 10.

In Table 4, the communication statuses of the terminals 10 corresponding to the communication IDs "01aa" and "01ab" are both "chat", which clarifies that the conference is in progress. Furthermore, conference room information such as "C0001@tokyo.conf.example.com" is stored in the joining conference room associated with the communication IDs "01aa" and "01ab" of the terminals 10 currently joining the conference session. As a result, the conference room of the conference joined by the terminals 10 having the communication IDs "01aa" and "01ab" may be clarified.

### RELAY MANAGEMENT APPARATUS MANAGEMENT TABLE

The storage 6000 includes a relay management apparatus management DB 6003 constituted by a relay management apparatus management table as illustrated in Table 5.

**Table 5**

| RELAY MANAGEMENT APPARATUS ID | HOST NAME | OPERATING STATUS |
|---|---|---|
| jp01 | router.jp01.example.com | active |
| us01 | router.us01.example.com | active |
| gb01 | router.gb01.example.com | active |
| ··· | ··· | ··· |

In this relay management apparatus management table, a host name and an operating status of each relay management apparatus 40 are managed in association with a relay management apparatus ID of the corresponding relay management apparatus 40. For example, in the relay management apparatus management table illustrated in Table 5, the relay management apparatus 40 having a relay management apparatus ID "jp01" has a host name "router.jp 01.example.com", and an operating status "active".

The transmitter-receiver 61 is implemented by instructions from the CPU 501 and by the network I/F 509. The transmitter-receiver 61 is configured to transmit and receive various data (or information) with respect to another terminal, apparatus, or system via the communication network 2.

The storage-reader 69 is implemented by instructions from the CPU 501 and by the HDD 505, or by instructions from the CPU 501 alone, and is configured to store various data in the storage 6000 and read various data stored in the storage 6000.

### PROCESS OR OPERATION OF EMBODIMENT

The following illustrates processes or operations of the terminal 10, the relay system 3, and the management system 5 constituting the communication system 1 of the present embodiment. First, an outline of the processes and operations in the communication system 1 will be described.

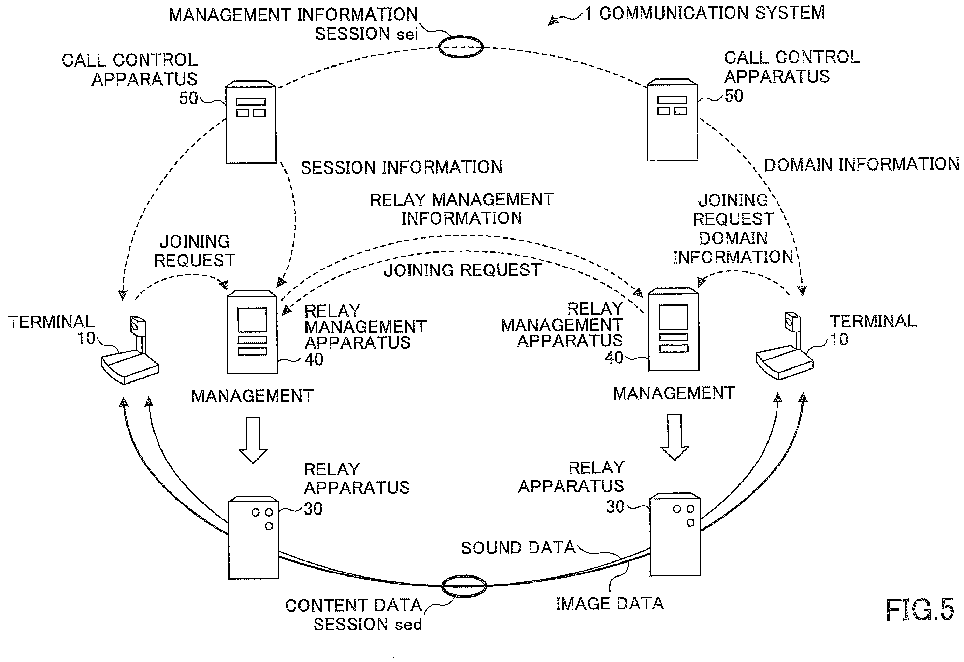

FIG. 5 is a conceptual diagram illustrating a state of transmission and reception of content data and various management information in the communication system.

As illustrated in FIG. 5, in the communication system 1, the management information session sei is established for transmitting and receiving various types of management information between the terminals 10 via one or more call control apparatuses 50, or between the terminal 10 and the call control apparatus 50. In addition, a session for transmitting and receiving content data (image data and sound data) is established between the terminals 10 via one or more relay apparatuses 30. These sessions are collectively illustrated as a content data session sed. That is, the content data session sed is used for a video conference. The relay management apparatus 40 manages the relay apparatus 30 such that the relay apparatus 30 relays content data on a predetermined route based on the session information transmitted from the call control apparatus 50.

Subsequently, the processes or operations of the terminal 10, the relay system 3, and the management system 5 constituting the communication system 1 of the present embodiment will be described in detail. First, a process in which the terminal 10 logs in to the call control apparatus 50 will be described.

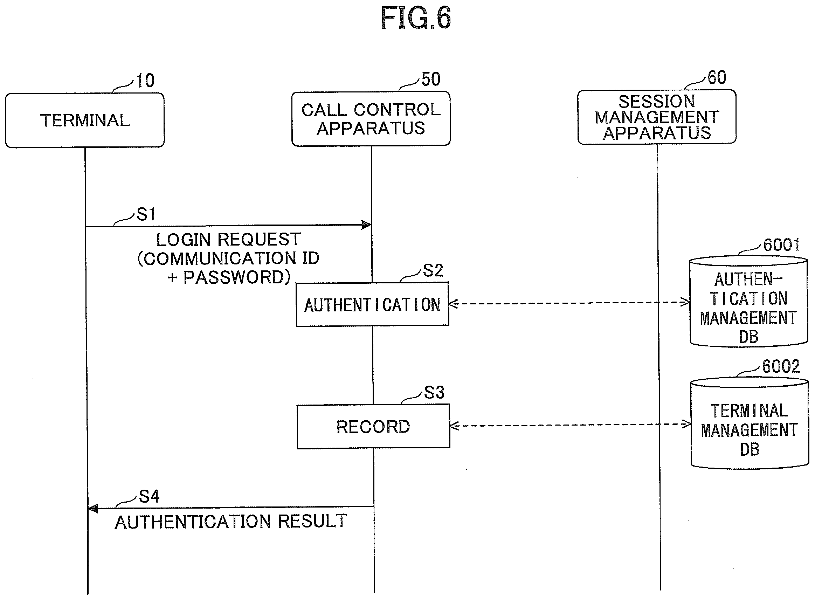

FIG. 6 is a sequence diagram illustrating a process in which the terminal 10 logs in to the call control apparatus 50.

In the communication system 1, the terminal 10 may transmit a login request to a desired one of the call control apparatuses 50. The method of selecting the call control apparatus 50 that will be acting as a login request destination is not particularly specified; however, the call control apparatus 50 may be selected on the basis of the information input at the terminal 10, the nearest call control apparatus 50 may be selected on the basis of the geographical position information of the terminal 10, or the call control apparatus 50 may be selected by using global load balancing (GSLB).

The terminal 10 transmits a login request to a desired call control apparatus 50 via the transmitter-receiver 11 (step S1). The login request includes a communication ID and a password for identifying a login request source terminal 10. As a result, the transmitter-receiver 51 of the call control apparatus 50 receives the login request, the communication ID and the password.

Next, the authentication unit 52 transmits an inquiry to the session management apparatus 60 to determine whether a communication ID and password combination the same as the communication ID and password combination received by the transmitter-receiver 51 is included in the authentication management table (see Table 3), thereby authenticating the login request source terminal 10 (step S2). In this case, the transmitter-receiver 51 of the call control apparatus 50 transmits the communication ID and the password transmitted from the login request source terminal 10 to the session management apparatus 60. The storage-reader 69 of the session management apparatus 60 refers to the authentication management table and determines whether the communication ID and password combination received from the call control apparatus 50 is included in the authentication management table. The transmitter-receiver 61 of the session management apparatus 60 transmits a result of the determination to the call control apparatus 50.

When this authentication determines that the terminal is an authorized terminal, the manager 53 sends, to the session management apparatus 60 via the transmitter-receiver 51, a request to record "ONLINE" as an operating status corresponding to the communication ID of the login request source and record the connection destination (site) in the terminal management table (see Table 4) (step S3). In the communication system 1, the terminal 10 is coupled to the relay management apparatus 40 at the same site as the call control apparatus 50 to which the terminal 10 is coupled. Accordingly, when a call control apparatus 50a arranged in the data center in Tokyo receives the login request, the manager 53 makes a request to record "Tokyo" as a connection destination corresponding to the communication ID of the login request source in the terminal management table. The storage-reader 69 of the session management apparatus 60 updates the terminal management table based on the received request.

Subsequently, the transmitter-receiver 51 transmits an authentication result to the login request source terminal 10 (step S4).

Next, a process of establishing a content data session sed between the terminals 10 will be described.

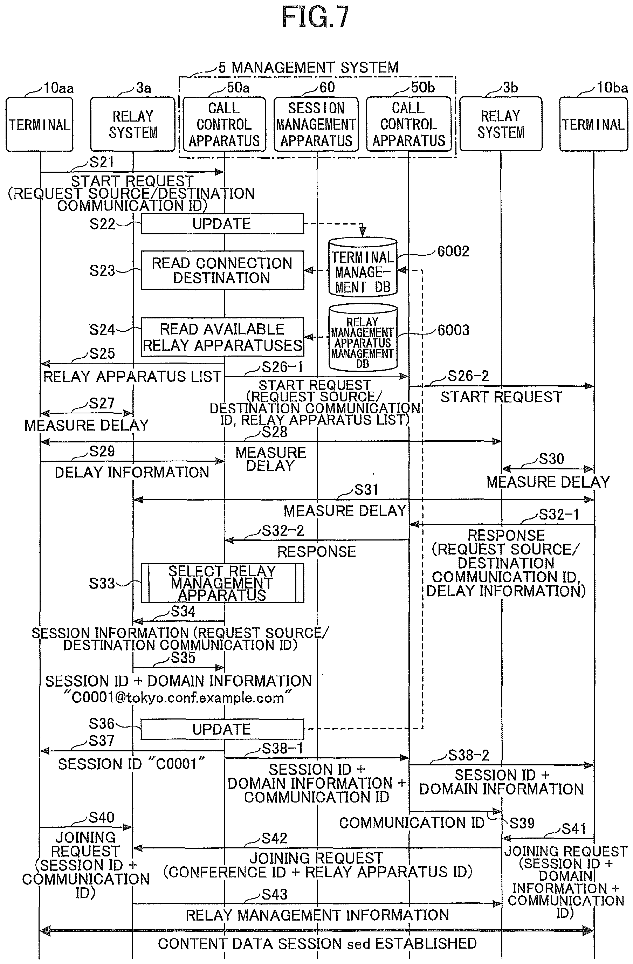

FIG. 7 is a sequence diagram illustrating a process of establishing the content data session sed. The following illustrates a case where the terminal 10aa coupled to the call control apparatus 50a in the process illustrated in FIG. 6 makes a request for starting communication with the terminal 10ba coupled to the call control apparatus 50b in the process illustrated in FIG. 6.

The terminal 10aa transmits a communication start request to the call control apparatus 50a by the transmitter-receiver 11 in response to an operation of the operation button 108 by the user (step S21). The communication start request includes a communication ID "01aa" of the terminal 10aa acting as a communication start request source and a communication ID "01ba" of a destination terminal 10ba.

The transmitter-receiver 51 of the call control apparatus 50a receives the communication start request. Subsequently, the manager 53 of the call control apparatus 50a requests the session management apparatus 60 via the transmitter-receiver 51 to set "chat" in a communication status corresponding to the communication ID of the communication start request source terminal and the destination terminal (10aa and 10ba) in the terminal management table (see Table 4) (Step S22). The communication status "chat" indicates that the terminal 10 corresponding to the communication ID is currently communicating with another terminal. The storage-reader 69 of the session management apparatus 60 updates the terminal management table based on the request from the call control apparatus 50a.

Subsequently, the session controller 58 of the call control apparatus 50a transmits an inquiry to the session management apparatus 60 via the transmitter-receiver 51 about a connection destination associated with the communication ID of the destination terminal 10ba in the terminal management table (see Table 4) (Step S23). Based on the above inquiry, the storage-reader 69 of the session management apparatus 60 reads the connection destination the "UK" associated with the communication ID "01ba" of the terminal 10ba in the terminal management table. The transmitter-receiver 61 of the session management apparatus 60 transmits the read connection destination to the call control apparatus 50a.

Subsequently, the session controller 58 of the call control apparatus 50a transmits an inquiry to the session management apparatus 60 via the transmitter-receiver 51 about a relay apparatus in a relay apparatus management table (see Table 5) (Step S24). Based on the above inquiry, the storage-reader 69 of the session management apparatus 60 reads a relay management apparatus ID corresponding to the operating status being "active" in the relay management apparatus management table. Note that the operating status "active" represents accessibility or availability of the relay apparatuses corresponding to the relay management apparatus ID. The transmitter-receiver 61 of the session management apparatus 60 transmits a relay apparatus list (a list of the relay apparatuses) including the read relay management apparatus ID to the call control apparatus 50a.

Subsequently, the transmitter-receiver 51 of the call control apparatus 50a transmits the relay apparatus list transmitted from the session management apparatus 60 to the terminal 10aa (step S25).

Subsequently, the transmitter-receiver 51 of the call control apparatus 50a transmits the communication start request and the relay apparatus list to the call control apparatus 50b located at the data center (site B) in the UK based on the connection destination transmitted from the session management apparatus 60 (Step S26-1).
The communication start request includes the communication IDs of the communication start request source terminal and the destination terminal (10bb and 10aa) and the relay apparatus list.
The transmitter-receiver 51 of the call control apparatus 50b transmits the received start request to the destination terminal 10ba (Step S526-2).

The delay measurement unit 15 of the terminal 10aa measures an interval between a time at which a packet has been transmitted to the relay system 3a (the relay management apparatus 40a) and the relay system 3b (the relay management apparatus 40b) and a time at which a response packet to the packet has been received as a delay time (steps S27 and S28).

The delay measurement unit 15 of the terminal 10aa reports the delay information including the delay time to the call control apparatus 50a (step S29).

The delay measurement unit 15 of the destination terminal that has received the communication start request measures an interval between a time at which a packet to the relay system 3a (the relay management apparatus 40a) and the relay system 3b (the relay management apparatus 40b) has been transmitted and a time at which a response packet to the packet has been received as a delay time (steps S30 and S31).

When the user inputs an operation to accept the start of communication, the terminal 10ba that has received the communication start request transmits a response indicating acceptance of the communication start request to the call control apparatus 50b (Step S32-1). This response includes the communication IDs of the communication start request source terminal and the destination terminal (10aa and 10ba) and delay information such as delay time. The transmitter-receiver 51 of the call control apparatus 50b transmits the received response to the call control apparatus 50a (Step S32-2) .

When the transmitter-receiver 51 of the call control apparatus 50a receives the response, the session controller 58 selects the relay management apparatus 40 that relays the content data from among the relay management apparatuses disposed in the communication system 1 in a session to be established based on the communication start request (Step S33). When a video conference is held between multiple terminals 10, the relay management apparatus 40 has a function to synthesize image data, sound data, and the like transmitted from each of the terminals 10 that join the video conference and to output the synthesized data as video conference content data to each of the terminals 10 that join the video conference. In a certain video conference, the relay management apparatus 40 that transmits video conference content data to each of the terminals 10 that join the video conference is also called a "conference room management apparatus". The session ID and domain information corresponding to the content data session sed are generated by this conference room management apparatus. It is assumed that when two or more relay management apparatuses 40 are selected in step S33, the relay management apparatus 40 coupled to the communication start request source terminal 10 of the content data session sed will be selected as the conference room management apparatus. The following describes a case where a relay management apparatus 40a located at site A is selected as the conference room management apparatus, where the site A is a connection destination of the communication start request source terminal 10aa.

The transmitter-receiver 51 of the call control apparatus 50a transmits to the relay management apparatus 40a of the relay system 3a session information related to the content data session sed established between the terminals (10aa and 10ba) based on the request of the terminal 10aa (step S34). The session information at least includes the communication IDs of the communication start request source terminal and the destination terminal (10aa and 10ba). The relay management apparatus 40a that has received the session information generates a session ID "C0001" for identifying the above-described session. In addition, the relay management apparatus 40a transmits the generated session ID to the call control apparatus 50a in association with the domain information "tokyo.conf.example.com" indicating its own apparatus (step S35). In order to facilitate understanding of the user of the terminal 10 to act as a transmission destination of the session ID later, in the communication system 1, "conference (ID, information)" or "conference room (ID, information)" and the like may be used instead of "session (ID, information)".

In the call control apparatus 50a that has received the session ID and the domain information, the manager 53 requests the session management apparatus 60 via the transmitter-receiver 51 to determine "C0001@tokyo.conf.example.com" for a session ID and a joining conference room corresponding to the communication IDs of the communication start request source terminal and the destination terminal (10aa and 10ba) in the terminal management table (see Table 4) (step S36). The storage-reader 69 of the session management apparatus 60 updates the terminal management table based on the request from the call control apparatus 50a.

Subsequently, the call control apparatus 50a transmits the session ID "C0001" received in step S35 to the start request source terminal 10aa (step S37). At this time, the relay management apparatus ID and a host name of the relay management apparatus 40a, to which the terminal 10aa is coupled in the content data session identified by the session ID "C0001", are also transmitted. The call control apparatus 50a transmits the session ID and the domain information "C0001@tokyo.conf.example.com" received in step S35 and the communication ID of the destination terminal 10ba to the call control apparatus 50b to which the destination terminal 10ba is coupled (step S38-1). At this time, the relay management apparatus ID and the host name of the relay management apparatus 40b, to which the terminal 10ba is coupled in the content data session identified by the session ID "C0001", are also transmitted.

The transmitter-receiver 51 of the call control apparatus 50b transmits the session ID and the domain information "C0001@tokyo.conf.example.com" received from the call control apparatus 50a to the terminal 10ba (Step S38-2). At this time, the relay management apparatus ID and the host name of the relay management apparatus 40b, to which the terminal 10ba is coupled in the content data session identified by the session ID "C0001", are also transmitted. In addition, the transmitter-receiver 51 of the call control apparatus 50b transmits the communication ID of the destination terminal 10ba received from the call control apparatus 50a to the relay management apparatus 40b constituting the relay system 3b (Step S39).

The start request source terminal 10aa transmits, based on the relay management apparatus ID received in step S37, the communication ID of its own terminal (10aa) to the relay management apparatus 40a, thereby coupling to the relay management apparatus 40a. Subsequently, the transmitter-receiver 11 of the terminal 10aa transmits the session ID received from the call control apparatus 50a and the communication ID of its own terminal (10aa) to the relay management apparatus 40a, thereby making a request for joining the content data session sed identified by this session ID (step S40).

The relay management apparatus 40a that has received the join request allocates the relay apparatus 30 for relaying the content data in this session among the relay apparatuses 30 managed by its own apparatus (40a) so as to couple the allocated relay apparatus 30 (the relay apparatus 30aa in this example) to the join request source terminal 10aa. As a result, the terminal 10aa may be enabled to transmit the content data generated by its own apparatus to the relay apparatus 30aa.

The destination terminal 10ba transmits the communication ID of its own terminal to the relay management apparatus 40b based on the relay management apparatus ID received in step S38-2. When the communication ID transmitted from the terminal 10ba is the same as the communication ID received from the call control apparatus 50b, the relay management apparatus 40b authorizes the connection. After being coupled to the relay management apparatus 40b, the transmitter-receiver 11 of the terminal 10ba transmits the session ID and domain information received from the call control apparatus 50b as well as the communication ID of its own terminal (10ba) to the relay management apparatus 40b so as to transmit a request to join the content data session sed identified by the session ID (step S41).

The relay management apparatus 40b that has received the join request allocates the relay apparatus 30 for relaying the content data in this session among the relay apparatuses 30 managed by its own apparatus (40b) so as to couple the allocated relay apparatus 30 (the relay apparatus 30ba in this example) to the destination terminal 10ba. As a result, the terminal 10ba may be enabled to transmit the content data generated by its own apparatus (40b) to the relay apparatus 30ba.

Subsequently, the relay management apparatus 40b transmits a join request to the relay management apparatus 40a based on the domain information included in the join request received from the terminal 10ba (step S42). The join request transmitted in step S42 includes the communication ID and session ID of the terminal 10ba included in the join request received from the terminal 10ba and the relay apparatus ID of the relay apparatus 30ba allocated by its own apparatus (40b).

The relay management apparatus 40a transmits the relay management information used for managing the relay of the content data to the relay management apparatus 40b (step S43). The relay management information includes information indicating a transfer destination and the like of the content data of the relay apparatus 30ba. Based on the relay management information, the relay management apparatus 40b manages the relay apparatus 30ba to transmit the content data received from the relay apparatus 30aa to the terminal 10ba and to transmit the content data received from the terminal 10ba to the relay apparatus 30aa.

The relay management apparatus 40a manages the relay apparatus 30aa to transmit the content data received from the relay apparatus 30ba to the terminal 10aa, and to transmit the content data received from the terminal 10aa to the relay apparatus 30ab based on the relay apparatus ID received from the relay management apparatus 40b.

In the process described above, a content data session sed for transmitting content data via the relay apparatuses (30aa and 30ba) will be established between the terminals (10aa and 10ba).

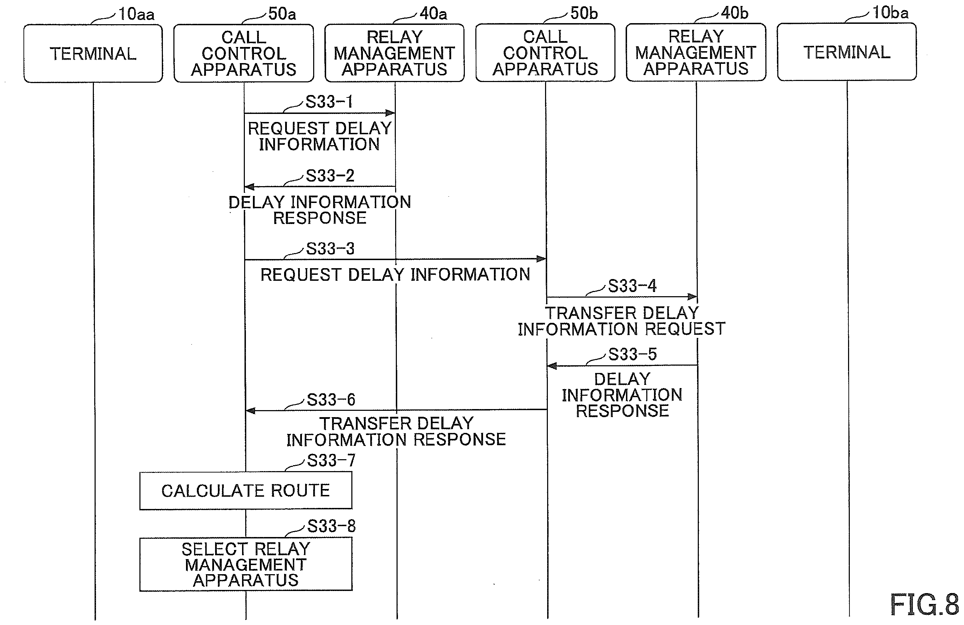

Subsequently, details of the process (step S33) in which the call control apparatus 50a selects a relay management apparatus will be described with reference to FIG. 8. This process is executed by the nearest call control apparatus of a communication start request source terminal. In this case, since the terminal 10aa is a communication start request source, the call control apparatus 50a is the nearest call control apparatus.

FIG. 8 is a sequence diagram illustrating a process of selecting a relay management apparatus.

The route setter 54 of the call control apparatus 50a transmits a delay information request to the relay management apparatus 40a (step S33-1). This delay information request includes a communication ID "01aa" of the communication start request source terminal 10aa and a relay management apparatus ID "jp01" of the relay management apparatus 40a.

The transmitter-receiver 41 of the relay management apparatus 40a receives a delay information request. The storage-reader 49 of the relay management apparatus 40a reads the delay information management table based on the delay information request. The transmitter-receiver 41 of the relay management apparatus 40a transmits a delay information response including the read delay information management table to the call control apparatus 50a (step S33-2).

The route setter 54 of the call control apparatus 50a transmits the delay information request to the call control apparatus 50b (step S33-3). This delay information request includes the communication ID "01aa" of the communication start request source terminal 10aa and a relay management apparatus ID "gp01" of a destination relay management apparatus 40b.

Subsequently, the transmitter-receiver 51 of the call control apparatus 50b transmits the delay information request transmitted from the call control apparatus 50a to the relay management apparatus 40b (step S33-4) .

The transmitter-receiver 41 of the relay management apparatus 40b receives the delay information request. The storage-reader 49 of the relay management apparatus 40b reads the delay information management table based on the delay information request. The transmitter-receiver 41 of the relay management apparatus 40b transmits a delay information response including the read delay information management table to the call control apparatus 50b (step S33-5).

Subsequently, the transmitter-receiver 51 of the call control apparatus 50b transmits the delay information response transmitted from the relay management apparatus 40b to the call control apparatus 50a (step S33-6).

Subsequently, the route setter 54 of the call control apparatus 50a performs route calculation based on the delay information reported by the terminals 10aa and 10ba and the delay information acquired from the relay management apparatuses 40a and 40b (step S33-7).

The route calculation will be described in detail below. The following illustrates a case where a site C (New York data center) is disposed in addition to the site A (Tokyo data center) and the site B (UK data center).

For example, in step S27, the delay time between the terminal 10aa and the relay system 3a is measured to be 10 ms, and in step S28, the delay time between the terminal 10aa and the relay system 3b is measured to be 350 ms. Further, it is assumed that the delay time from the terminal 10aa to the relay system at the site C is 200 ms.

In step S30, the delay time from the terminal 10ba to the relay system 3b is measured to be 150 ms, and in step S31, the delay time from the terminal 10ba to the relay system 3a is measured as 350 ms. Further, it is assumed that the delay time from the terminal 10 ba to the relay system at the site C is 250 ms.

The route setter 54 of the call control apparatus 50a calculates the delay time in each route.

For example, the delay time of the route from the terminal 10aa to the terminal 10ba via the relay management apparatus 40a is calculated as 10 ms + 350 ms = 360 ms. Further, for example, the delay time of the route from the terminal 10aa to the terminal 10ba via the relay management apparatuses 40a and 40b is calculated as 10 ms + 200 ms × 0.8 + 150 ms = 320 ms. Note that "0.8" is a priority factor in the route between the relay management apparatus 40a and the relay management apparatus 40b. Further, for example, the delay time of the route from the terminal 10aa via the relay management apparatus 40b to the terminal 10ba is calculated as 350 ms + 150 ms = 500 ms. Further, for example, the delay time of the route from the terminal 10aa to the terminal 10ba via the relay management apparatus 40a and a relay apparatus at the site C is calculated as 10 ms + 150 ms × 0.7 + 250 ms = 365 ms. Delay times are calculated for other routes in addition to those described above.

Subsequently, the route setter 54 of the call control apparatus 50a detects a route with the shortest delay time based on the delay time in each route, and selects a relay management apparatus corresponding to the detected route. In this case, since the delay time of the route from the terminal 10aa via the relay management apparatuses 40a and 40b to the terminal 10ba is the shortest, the route setter 54 selects the relay management apparatus 40a and the relay management apparatus 40b (step S33-8).

When two or more relay management apparatuses are selected in step S33-8, the session controller 58 of the call control apparatus 50a selects the relay management apparatus to serve as a conference room management apparatus. In other words, the relay management apparatus serving as the conference room management apparatus is selected from between the relay management apparatus 40a and the relay management apparatus 40b. In this case, the relay management apparatus 40a, to which the communication start request source terminal 10aa is coupled, is selected from between the relay management apparatus 40a and the relay management apparatus 40b for the route from the terminal 10aa via the relay management apparatuses 40a and 40b to the terminal 10ba.

As described above, the route setter 54 of the call control apparatus 50 constituting the management system 5 acquires delay information such as delay time for each content data session sed to be established, and sets a route with the shortest delay time. As a result, it is possible to select an optimum transmission route.

The session controller 58 of the call control apparatus 50 constituting the management system 5 selects a relay management apparatus 40 to serve as the conference room management apparatus from among the relay management apparatuses 40 based on the route set by the route setter 54, for each content data session sed to be established. The transmitter-receiver 51 of the call control apparatus 50 transmits domain information of the relay management apparatus 40 selected as the room management apparatus to at least one terminal 10 coupled to the relay management apparatus 40 differing from the conference room management apparatus, among the terminals 10 that join the content data session sed to be established.

As a result, the terminal 10 coupled to the relay management apparatus 40 differing from the conference room management apparatus may be enabled to join the session without receiving input of information indicating the conference room management apparatus and the like from the user. Accordingly, burden on the user is reduced.

Next, a process in which the terminal 10bb joins the content data session sed established between the terminals (10aa and 10ba) will be described. Note that it is assumed that a content data session sed for transmitting content data via the relay apparatuses (30aa and 30ba) is established between the terminals (10aa and 10ba) .

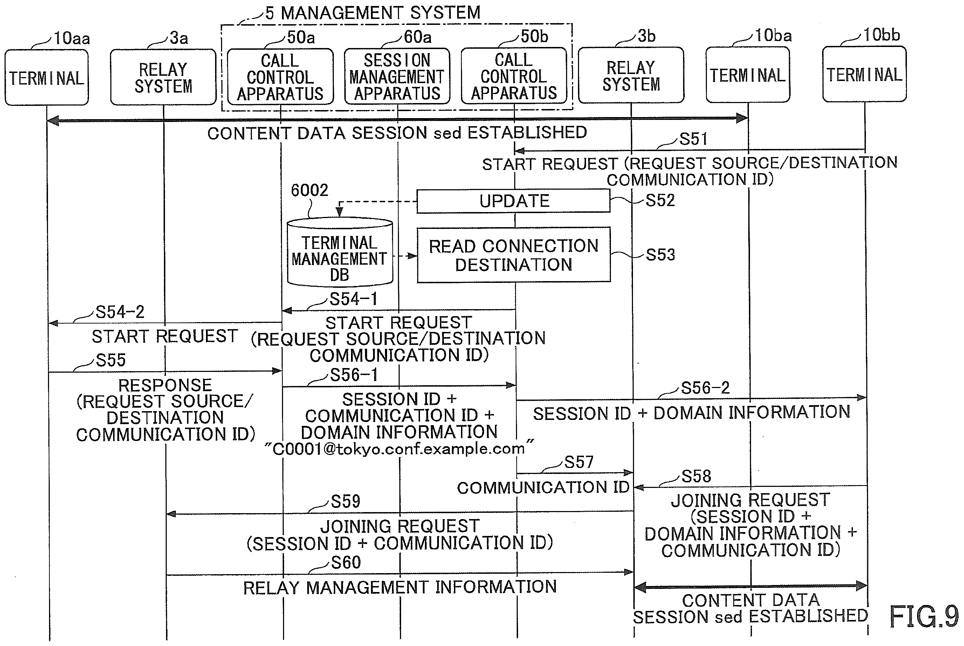

FIG. 9 is a sequence diagram illustrating a process of joining a content data session sed. The following illustrates a case in which the terminal 10bb is coupled to the call control apparatus 50b by login process.

The terminal 10bb transmits a communication start request to the call control apparatus 50b by the transmitter-receiver 11 in response to an operation of the operation button 108 by the user (step S51). The communication start request includes a communication ID "01ba" of the terminal 10bb acting as a communication start request source and a communication ID "01aa" of a destination terminal 10aa.

The transmitter-receiver 51 of the call control apparatus 50b receives the communication start request. Subsequently, the manager 53 of the call control apparatus 50b transmits a request to a session management apparatus 60 via the transmitter-receiver 51 to set "chat" in a communication status corresponding to the communication ID of the communication start request source terminal and the destination terminal (10aa and 10bb) in the terminal management table (see Table 4) (step S52). The storage-reader 69 of the session management apparatus 60 updates the terminal management table based on the request from the call control apparatus 50b.

Subsequently, the session controller 58 of the call control apparatus 50b transmits an inquiry to the session management apparatus 60 via the transmitter-receiver 51 about a connection destination (site) associated with the communication ID of the destination terminal 10aa in the terminal management table (see Table 4) (step S53). Based on the above inquiry, the storage-reader 69 of the session management apparatus 60 reads the connection destination "Tokyo" associated with the communication ID "01aa" of the terminal 10aa in the terminal management table. The transmitter-receiver 61 of the session management apparatus 60 transmits the read connection destination to the call control apparatus 50b.

Subsequently, the transmitter-receiver 51 of the call control apparatus 50b transmits a communication start request to the call control apparatus 50a located at the data center (site A) in Tokyo as the connection destination based on the connection destination transmitted from the session management apparatus 60 (step S54-1). The communication start request includes the communication IDs of the communication start request source terminal and the destination terminal (10bb and 10aa). The transmitter-receiver 51 of the call control apparatus 50a transmits the received start request to the destination terminal 10aa (step S54-2).

When the user inputs an operation to accept the start of communication, the terminal 10aa that has received the communication start request transmits a response indicating acceptance of the communication start request to the call control apparatus 50a (step S55).

Upon receiving the response indicating authorization to start communication, the transmitter-receiver 51 of the call control apparatus 50a transmits to the call control apparatus 50b a session ID generated by the relay management apparatus 40a that manages the content data and the domain information of the relay management apparatus 40a (see step S35), and the communication ID of the communication start request source terminal 10bb with respect to the content data session joined by the terminal 10aa (step S56-1).

The transmitter-receiver 51 of the call control apparatus 50b transmits the session ID and the domain information "C0001@tokyo.conf.example.com" received from the call control apparatus 50a to the terminal 10bb (step S56-2). In addition, the transmitter-receiver 51 of the call control apparatus 50b transmits the communication ID of the terminal 10bb received from the call control apparatus 50a to the relay management apparatus 40b constituting the relay system 3b (step S57).

The communication start request source terminal 10bb transmits the communication ID of its own terminal (10bb) to the relay management apparatus 40b located at the site B to which the call control apparatus 50b belongs. When the communication ID transmitted from the terminal 10bb is the same as the communication ID received from the call control apparatus 50b, the relay management apparatus 40b authorizes the connection. After being coupled to the relay management apparatus 40b, the transmitter-receiver 11 of the terminal 10bb transmits the session ID and domain information received from the call control apparatus 50b as well as the communication ID of its own terminal (10bb) to the relay management apparatus 40b so as to transmit a join request to join the content data session sed identified by the session ID (step S58).

The relay management apparatus 40b that has received the join request couples the relay apparatus 30ba that is allocated for relaying the content data in this content data session sed, among the relay apparatuses 30 managed by its own apparatus, to the terminal 10bb. As a result, the terminal 10bb may be enabled to transmit the content data generated by its own apparatus to the relay apparatus 30ba.

Subsequently, the relay management apparatus 40b transmits a join request to the relay management apparatus 40a based on the domain information included in the join request received from the terminal 10bb (step S59). The join request transmitted in step S59 includes the communication ID and session ID of the terminal 10bb included in the join request received from the terminal 10bb and the relay apparatus ID of the relay apparatus 30ba.

The relay management apparatus 40a transmits the relay management information used for managing the relay of the content data to the relay management apparatus 40b (step S60). The relay management information includes information indicating a transfer destination of the content data by the relay apparatus 30ba. Based on the relay management information, the relay management apparatus 40b manages the relay apparatus 30ba to transmit the content data received from the relay apparatus 30aa to the terminals (10ba, 10bb), to transmit the content data received from the terminal 10ba to the relay apparatus 30aa and the terminal 10bb, and to transmit the content data received from the terminal 10bb to the relay apparatus 30aa and the terminal 10ba. The relay management apparatus 40a manages the relay apparatus 30aa to transmit the content data received from the relay apparatus 30ba to the terminal 10aa, and to transmit the content data received from the terminal 10aa to the relay apparatus 30ba based on the join request received from the relay management apparatus 40b.

As a result of the process described above, a session for transmitting content data via the relay apparatuses (30aa, 30ba) is established between the terminals (10aa, 10ba, 10bb).

### EFFECT OF EMBODIMENT

Subsequently, main effects of the above embodiment will be described.

The management system 5 controls establishment of a content data session sed for transmitting content data in the communication system 1 having two or more of relay management apparatuses 40 for managing the relay of the content data transmitted from the terminal 10. The route setter 54 of the call control apparatus 50 constituting the management system 5 acquires delay information such as delay time for each content data session sed to be established, and sets a route with the shortest delay time. The session controller 58 of the call control apparatus 50 constituting the management system 5 selects a relay management apparatus 40 to serve as the conference room management apparatus from among the relay management apparatuses 40 based on the route set by the route setter 54, for each content data session sed to be established.

The transmitter-receiver 51 of the call control apparatus 50 transmits domain information of the relay management apparatus 40 selected by the session controller 58 to at least one terminal 10 coupled to the relay management apparatus 40 differing from the conference room management apparatus among the terminals 10 that join the content data session sed to be established.

The receiving of the domain information enables the terminal 10 coupled to the relay management apparatus 40 differing from the conference room management apparatus to join the session without receiving input of information indicating the selected relay management apparatus 40 and the like from the user. Accordingly, burden on the user is reduced.

In the example described above with reference to FIG. 7, two or more relay management apparatuses 40 are included in the route of the content data session sed established between the terminal 10aa and the terminal 10ba. However, alternatively, only one relay management apparatus 40 may be included in the route of the content data session sed established between the terminal 10aa and the terminal 10ba.

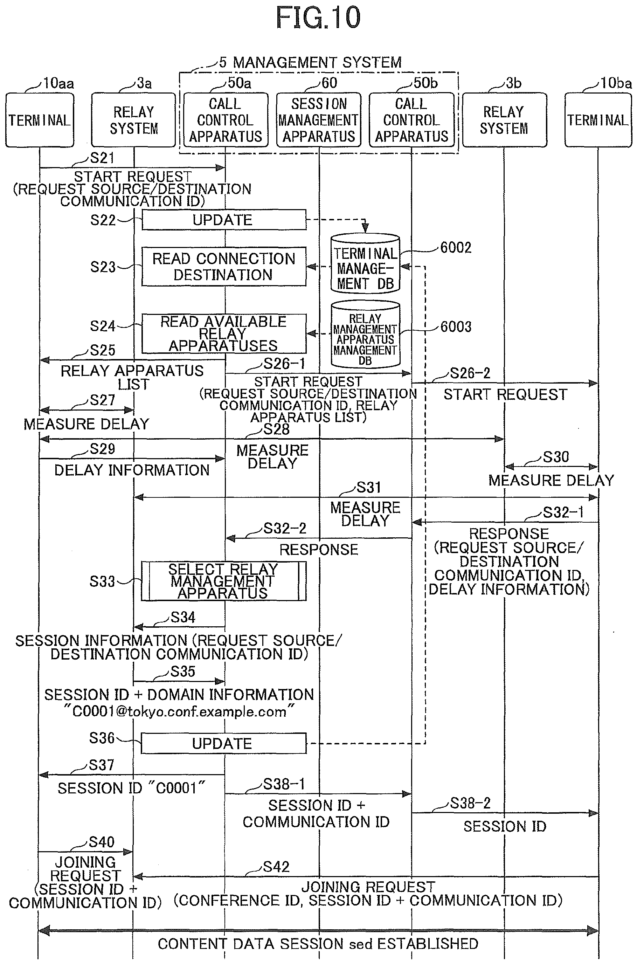

FIG. 10 is a sequence diagram illustrating another example process of establishing the content data session sed. The following illustrates a case where the terminal 10aa coupled to the call control apparatus 50a in the process illustrated in FIG. 6 makes a request for starting communication with the terminal 10ba coupled to the call control apparatus 50b in the process illustrated in FIG. 6.

The process of steps S21 to S32-2 of FIG. 10 is the same as the process of steps S21 to S32-2 of FIG. 7, and a duplicated illustration is thus omitted from the specification.

In step S33 of FIG. 10, the process in steps S33-1 to S33-6 in FIG. 8 is executed in the same manner as in the above-described embodiment.

In this case, it is assumed that in step S27, the delay time between the terminal 10aa and the relay system 3a is measured to be 10 ms, and in step S28, the delay time between the terminal 10aa and the relay system 3b is measured to be 250 ms. Further, it is assumed that the delay time from the terminal 10aa to the relay system at the site C is 200 ms.

It is assumed that in step S30, the delay time from the terminal 10ba to the relay system 3b is measured to be 150 ms, and in step S31, the delay time from the terminal 10ba to the relay system 3a is measured as 150 ms. Further, it is assumed that the delay time from the terminal 10 ba to the relay system at the site C is 250 ms.

The delay information management table at the site A acquired in step S33-2 is illustrated in Table 6.

**Table 6**

| RELAY MANAGEMENT APPARATUS ID | DELAY INFORMATION | PRIORITY FACTOR |
|---|---|---|
| gb01 | 200ms | 0.8 |
| us01 | 150ms | 0.7 |
| ... | ... | ... |

The delay information management table at the site B acquired in step S33-6 is illustrated in Table 7.

**Table 7**

| RELAY MANAGEMENT APPARATUS ID | DELAY INFORMATION | PRIORITY FACTOR |
|---|---|---|
| jp01 | 200ms | 0.8 |
| us01 | 150ms | 0.7 |
| ... | ... | ... |

Further, the delay information management table at the site C is illustrated in Table 8.

**Table 8**

| RELAY MANAGEMENT APPARATUS ID | DELAY INFORMATION | PRIORITY FACTOR |
|---|---|---|
| jp01 | 150ms | 0.7 |
| gb01 | 150ms | 0.7 |
| ... | ... | ... |

The route setter 54 of the call control apparatus 50a calculates the delay time in each route.

For example, the delay time of the route from the terminal 10aa to the terminal 10ba via the relay management apparatus 40a is calculated as 10 ms + 150 ms = 160 ms. Further, for example, the delay time of the route from the terminal 10aa to the terminal 10ba via the relay management apparatuses 40a and 40b is calculated as 10 ms + 200 ms × 0.8 + 150 ms = 320 ms. Note that "0.8" is a priority factor in the route between the relay management apparatus 40a and the relay management apparatus 40b. Further, for example, the delay time of the route from the terminal 10aa via the relay management apparatus 40b to the terminal 10ba is calculated as 250 ms + 150 ms = 400 ms. Further, for example, the delay time of the route from the terminal 10aa to the terminal 10ba via the relay management apparatus 40a and a relay apparatus at the site C is calculated as 10 ms + 150 ms × 0.7 + 250 ms = 365 ms. Delay times are calculated for other routes in addition to those described above.

Subsequently, the route setter 54 of the call control apparatus 50a detects a route with the shortest delay time based on the delay time in each route, and selects a relay management apparatus corresponding to the detected route. In this case, since the delay time of the route from the terminal 10aa via the relay management apparatus 40a to the terminal 10ba is the shortest, the route setter 54 selects the relay management apparatus 40a (step S33-8).

In this case, since only one relay management apparatus is included in the route of the content data session sed, the relay management apparatus 40a is selected as a conference room management apparatus.

Referring back to FIG. 10, in step S37, the call control apparatus 50a transmits the session ID "C0001" received in step S35 to the start request source terminal 10aa. At this time, the relay management apparatus ID and a host name of the relay management apparatus 40a, to which the terminal 10aa is coupled in the content data session identified by the session ID "C0001", are also transmitted. In step S38-1, the call control apparatus 50a transmits the session ID received in step S35 and the communication ID of the destination terminal 10ba to the call control apparatus 50b to which the destination terminal 10ba is coupled. At this time, the relay management apparatus ID and the host name of the relay management apparatus 40a, to which the terminal 10ba is coupled in the content data session identified by the session ID "C0001", are also transmitted.

Further, in step S38-2, the transmitter-receiver 51 of the call control apparatus 50b transmits the session ID received from the call control apparatus 50a to the destination terminal 10ba. At this time, the relay management apparatus ID and the host name of the relay management apparatus 40a, to which the terminal 10ba is coupled in the content data session identified by the session ID "C0001", are also transmitted.

In step S40, the start request source terminal 10aa transmits the communication ID of its own terminal to the relay management apparatus 40a based on the relay management apparatus ID received in step S37, thereby coupling to the relay management apparatus 40a. Subsequently, the transmitter-receiver 11 of the terminal 10aa transmits the session ID received from the call control apparatus 50a and the communication ID of its own terminal (10aa) to the relay management apparatus 40a, thereby making a request for joining the content data session sed identified by this session ID.

The relay management apparatus 40a that has received the join request allocates the relay apparatus 30 that relays the content data in this session, selected from among the relay apparatuses 30 managed by its own apparatus, so as to couple the allocated relay apparatus 30 (the relay apparatus 30aa in this example) to the join request source terminal 10aa. As a result, the terminal 10aa may be enabled to transmit the content data generated by its own apparatus to the relay apparatus 30aa.

In step S42, the destination terminal 10ba transmits the communication ID of its own terminal to the relay management apparatus 40a based on the relay management apparatus ID received in step S38-2. When the communication ID transmitted from the terminal 10ba is the same as the communication ID received from the call control apparatus 50b, the relay management apparatus 40a authorizes the connection. Subsequently, the transmitter-receiver 11 of the terminal 10ba transmits the session ID received from the call control apparatus 50b and the communication ID of its own terminal (10ba) to the relay management apparatus 40a, thereby making a request for joining the content data session sed identified by this session ID.

The relay management apparatus 40a that has received the join request couples the relay apparatus 30aa that relays the content data in this session to the destination terminal 10ba. As a result, the terminal 10ba may be enabled to transmit the content data generated by its own apparatus to the relay apparatus 30aa.

The relay management apparatus 40a manages the relay apparatus 30aa to transmit the content data received from the terminal 10aa to the terminal 10ba and to transmit the content data received from the terminal 10ba to the terminal 10aa.

In the process described above, a content data session sed for transmitting content data via the relay apparatus (30aa) will be established between the terminals (10aa and 10ba).

### SUPPLEMENTARY EXPLANATION OF EMBODIMENT

Each of the programs for the terminal 10, the relay apparatus 30, the relay management apparatus 40, the call control apparatus 50, and the session management apparatus 60 is stored in a computer-readable recording medium (a recording medium 106 etc.) in an installable form or in an executable forms so as to be ready for distribution. Other examples of the recording medium may include a compact disc recordable (CD-R), a digital versatile disk (DVD), and a Blu-ray Disc.

Further, the relay system 3 and the management system 5 in the above embodiment may be configured by a single computer, or may be configured by multiple computers optionally assigned by dividing into system components (functions or means).

The above-described recording medium such as a CD-ROM and the HD 504 each having a corresponding program stored therein may be provided domestically or internationally as a program product.

In the above description, a teleconference terminal as the call terminal has been described as an example of the terminal 10; however, the communication terminal 10 is not limited to this example; the communication terminals may be any terminals insofar as the terminals may communicate with one another. For example, the terminal 10 may be a wearable computer, a monitoring camera, an industrial apparatus having a communication function, an internet protocol (IP) telephone, an Internet telephone, and a personal computer (PC). Note that examples of the wearable computer include a wrist watch, a head-mounted display, and the like. In addition, examples of the industrial apparatus include an office apparatus such as a multifunction peripheral/printer/product (MFP), a medical apparatus such as an endoscope, an agricultural apparatus such as a cultivator, and the like. Further, the terminal 10 may be a projector, an electronic signage (digital signage), or an interactive whiteboard.

Furthermore, in the above description, a call (communication) is made by a terminal (intermediate concept) such as a teleconference terminal (narrower concept); however, communication may be made by any form. For example, the present technology may also be applied to a case where an application installed in the terminal automatically accesses the center server to transmit or acquire various data. In this case, a counterpart may be a server, not a terminal. Further, examples of the terminal include a game machine, a car navigation system, or the like.

Furthermore, in the above embodiment, an IP address of the relay apparatus and an IP address of the terminal are managed; however, a fully qualified domain name (FQDN) may be managed instead of the IP address. In this case, an IP address corresponding to the FQDN is acquired by a well-known domain name system (DNS) server.

In the above embodiment, a teleconference system has been described as an example of a transmission system; however, the teleconference system is not limited to this example. An internet protocol (IP) telephone or an Internet telephone may also be used as a telephone system. The transmission system may be a car navigation system. In this case, one of the terminals 10 corresponds to a car navigation apparatus mounted in the automobile, the other one of the terminals 10 is installed in a management terminal or a management server of a management center that manages car navigation, or a car navigation apparatus mounted in another automobile. Further, the transmission system may be a communication system of a mobile phone. In this case, the terminal 10 corresponds to a mobile phone.

In the above embodiment, image data and audio data are described as examples of content data; however, the content data are not limited to these examples. The content data may be touch data. In this case, the feeling or sense that the user touched on one terminal is transmitted to the other terminal. Further, the content data may be olfactory (smell) data. In this case, the smell (odor) on one terminal is transmitted to the other terminal. Further, the content data may be at least one of image data, audio data, tactile data, and olfactory data.

Further, in the above-described embodiment, a teleconference performed by a transmission system has been described. However, the present invention is not limited to this example. The transmission system may be used in a general conversation such as a meeting held between family members or friends, or may be used in presentation of information in one direction communication.

In the above-described embodiment, the call control apparatus 50 is an example of a communication control apparatus, the session controller 58 is an example of a selector, the transmitter-receiver 51 is an example of a transmitter, the program for the call control apparatus 50 is an example of a communication control program.

Although the present invention has been described with reference to specific embodiments and modifications, it is to be understood that these embodiments and modifications are merely illustrative and that various modifications, modifications, alternatives, substitutions, and the like will be understood by those skilled in the art. For convenience of explanation, the apparatuses according to the embodiment of the present invention have been described using functional block diagrams; however, such apparatuses may be implemented in hardware, software, or a combination thereof. The present invention is not limited to the above embodiments; however, various modifications, modifications, alterations, substitutions, and the like are encompassed without departing from the spirit of the present invention.

The present application is based on and claims the benefit of priority of Japanese Priority Application No. 2015-051676 filed on March 16, 2015, the entire contents of which are hereby incorporated by reference.

### [Description of Reference Symbols]

- 1: communication system
- 2: communications network
- 5: management system
- 10: terminal
- 11: transmitter-receiver
- 12: operation input receiver
- 13: display controller
- 15: delay measurement unit
- 19: storage-reader
- 40: relay management apparatus
- 41: transmitter-receiver
- 42: status detector
- 46: terminal authorization unit
- 47: joining approval processor
- 48: delay measurement unit
- 49: storage-reader
- 50: call control apparatus
- 51: transmitter-receiver
- 52: authentication unit
- 53: manager
- 54: route setter
- 59: storage-reader
- 60: session management apparatus
- 61: transmitter-receiver
- 69: storage-reader
- 1000: storage
- 5000: storage
- 4000: storage
- 4001: joining approval determination DB
- 4002: delay information management DB
- 6000: storage
- 6001: authentication management DB
- 6002: terminal management DB
- 6003: relay management apparatus management DB

## Claims

1. A communication control apparatus configured to control establishment of sessions for transmitting content data between communication terminals in a communication system having a plurality of relay management apparatuses for relaying the content data transmitted from the communication terminals, the communication control apparatus comprising:
a route setter configured to select one or more relay management apparatuses for relaying the content data from among the plurality of relay management apparatuses to set a route for transmitting the content data, based on delay information for each of the sessions;
a selector configured to select, from among the relay management apparatuses selected by the route setter, a relay management apparatus to synthesize the content data transmitted from the communication terminals to transmit the synthesized content data to the communication terminals that join the session; and
a transmitter configured to transmit selection information indicating the selected relay management apparatus to, among the communication terminals that join the established session, at least one communication terminal coupled to a relay management apparatus differing from the selected relay management apparatus.

2. The communication control apparatus according to claim 1, wherein
the route setter sets the route based on a first delay information between a communication terminal that transmits the content data and each of the relay management apparatuses, a second delay information between a communication terminal that receives the content data and each of the relay management apparatuses, and a third delay information between the relay management apparatuses.

3. The communication control apparatus according to claim 1 or 2, wherein
the route setter calculates a delay time on a route between the communication terminal that transmits the content data and the communication terminal that receives the content data, based on the first delay information, the second delay information and the third delay information, and sets the route such that such that the delay time is the shortest.

4. The communication control apparatus according to claim 3, wherein
the route setter calculates a delay time on a route between the communication terminal that transmits the content data and the communication terminal that receives the content data, based on the first delay information between a communication terminal that transmits the content data and each of the relay management apparatuses, the second delay information between a communication terminal that receives the content data and each of the relay management apparatuses, and the third delay information between the relay management apparatuses, and sets the route such that such that the delay time is the shortest.

5. A communication system comprising:
a plurality of relay management apparatuses configured to relay content data transmitted from communication terminals; and
a communication control apparatus configured to control establishment of sessions for transmitting the content data between the communication terminals, wherein
each of the relay management apparatuses includes
a delay measurement unit configured to measure a delay time between one of the relay management apparatuses and a corresponding one of other relay apparatuses, and
a transmitter configured to transmit the measured delay time to the communication control apparatus, and wherein
the communication control apparatus includes
a route setter configured to select one or more relay management apparatuses for relaying the content data from among the plurality of relay management apparatuses to set a route for transmitting the content data, based on delay information for each of the sessions;
a selector configured to select, from among the relay management apparatuses selected by the route setter, a relay management apparatus to synthesize the content data transmitted from the communication terminals so as to transmit the synthesized content data to the communication terminals that join the session; and
a transmitter configured to transmit selection information indicating the selected relay management apparatus to, among the communication terminals that join the established session, at least one communication terminal coupled to a relay management apparatus differing from the selected relay management apparatus.

6. A communication system comprising:
one or more communications terminals;
a plurality of relay management apparatuses configured to relay content data transmitted from the communication terminals; and
a communication control apparatus configured to control establishment of a session for transmitting content data between the communication terminals, wherein
each of the communication terminals includes
a first delay measurement unit configured to measure a delay time between the communication terminal and the relay management apparatus, and
a first transmitter configured to transmit a first delay time measured by the first delay measurement unit to the communication control apparatus, wherein
each of the relay management apparatuses includes
a second delay measurement unit configured to measure a second delay time between the relay management apparatus and another relay apparatus, and
a second transmitter configured to transmit a second delay time measured by the second delay measurement unit to the communication control apparatus, and wherein
the communication control apparatus includes
a route setter configured to select, based on delay information for each session obtained based on the first delay information and the second delay information, one or more relay management apparatuses for relaying the content data from among the plurality of relay management apparatuses to set a route for transmitting the content data,
a selector configured to select, from among the relay management apparatuses selected by the route setter, a relay management apparatus to synthesize the content data transmitted from the communication terminals so as to transmit the synthesized content data to the communication terminals that join the session; and
a transmitter configured to transmit selection information indicating the selected relay management apparatus to, among the communication terminals that join the established session, at least one communication terminal coupled to a relay management apparatus differing from the selected relay management apparatus.

7. A communication control program for causing a communication control apparatus to perform a process of controlling establishment of sessions for transmitting content data between the communication terminals, the process including:
selecting one or more relay management apparatuses for relaying the content data from among the plurality of relay management apparatuses to set a route for transmitting the content data, based on delay information for each of the sessions;
selecting, from among the selected relay management apparatuses for setting the route, a relay management apparatus to synthesize the content data transmitted from the communication terminals so as to transmit the synthesized content data to the communication terminals that join the session; and
transmitting selection information indicating the selected relay management apparatus to, among the communication terminals that join the established session, at least one communication terminal coupled to a relay management apparatus differing from the selected relay management apparatus.

8. A communication control method executed by a communication control apparatus configured to control establishment of a session for transmitting content data between the communication terminals, the communication control method comprising:
selecting one or more relay management apparatuses for relaying the content data from among the plurality of relay management apparatuses to set a route for transmitting the content data, based on delay information for each of the sessions;
selecting, from among the selected relay management apparatuses for setting the route, a relay management apparatus to synthesize the content data transmitted from the communication terminals so as to transmit the synthesized content data to the communication terminals that join the session; and
transmitting selection information indicating the selected relay management apparatus to, among the communication terminals that join the established session, at least one communication terminal coupled to a relay management apparatus differing from the selected relay management apparatus.
